# EUROPEAN PATENT APPLICATION

(11) **EP 1 463 032 A1**
(43) Date of publication of application: **29.09.2004**
(21) Application number: 04006885.0
(22) Date of filing: 22.03.2004
(51) Int. Cl.: G10L 15/28

(54) **Distributed speech recognition for mobile communication devices**

(30) Priority: 24.03.2003 US 395609
(71) Applicant: MICROSOFT CORPORATION, Redmond, WA 98052 (US)
(72) Inventor: Huang, Xuedong, Bellevue, Washington 98006-5343 (US)
(74) Representative: Grünecker, Kinkeldey, Stockmair & Schwanhäusser Anwaltssozietät

(57) **Abstract**

A method of performing speech recognition, and a mobile computing device (10) implementing the same, are disclosed. The method includes receiving audible speech at a microphone (17) of the mobile computing device (10). The audible speech is converted into speech signals at the mobile computing device (10). Also at the mobile computing device (10), preliminary and secondary speech recognition functions are performed on the speech signals to obtain requests for results from modules. Then, the requests for results are transmitted from the mobile computing device (10) to a second computing device (12) located remotely from the mobile computing device (10) to obtain the results which are then transmitted back to the mobile computing device (10) for completion of the speech recognition process.

## Description

### BACKGROUND OF THE INVENTION

The present invention relates to personal mobile computing devices commonly known as handheld portable computers. More particularly, the present invention relates to a system and method for enhancing speech recognition performed with the use of mobile computing devices.

Mobile devices are small electronic computing devices sometimes referred to as personal digital assistants (PDAs). Many of such mobile devices are handheld devices, or palm-size devices, which comfortably fit within the hand. One commercially available mobile device is sold under the trade name HandHeld PC (or H/PC) having software provided by Microsoft Corporation of Redmond, Washington.

Generally, the mobile device includes a processor, random access memory (RAM), and an input device such as a keyboard and a display, wherein the keyboard can be integrated with the display, such as a touch sensitive display. A communication interface is optionally provided and is commonly used to communicate with a desktop computer. A replaceable or rechargeable battery powers the mobile device. Optionally, the mobile device can receive power from an external power source that overrides or recharges the built-in battery, such as a suitable AC or DC adapter, or a powered docking cradle.

In one common application, the mobile device is used in conjunction with the desktop computer. For example, the user of the mobile device may also have access to, and use, a desktop computer at work or at home. The user typically runs the same types of applications on both the desktop computer and on the mobile device. Thus, it is quite advantageous for the mobile device to be designed to be coupled to the desktop computer to exchange information with, and share information with, the mobile device.

As the mobile computing device market continues to grow, new developments can be expected. For example, mobile devices can be integrated with cellular or digital wireless communication technology to provide a mobile computing device which also functions as a mobile telephone. Thus, cellular or digital wireless communication technology can provide the communication link between the mobile device and the desktop (or other) computer. Further, speech recognition can be used to record data or to control functions of one or both of the mobile computing device and the desktop computer, with the user speaking into a microphone on the mobile device and with signals being transmitted to the desktop computer based upon the speech detected by the microphone.

Several problems arise when attempting to perform speech recognition, at the desktop computer, of words spoken into a remote microphone such as a microphone positioned on a mobile device. First, the signal-to-noise ratio of the speech signals provided by the microphone drops as the distance between the microphone and the user's mouth increases. With a typical mobile device being held in a user's palm up to a foot from the user's mouth, the resulting signal-to-noise ratio drop may be a significant speech recognition obstacle. Also, internal noise within the mobile device lowers the signal-to-noise ratio of the speech signals due to the close proximity of the internal noise to the microphone which is typically positioned on a housing of the mobile device. Second, due to bandwidth limitations of digital and other communication networks such as wireless communications networks, the speech signals received at the desktop computer will be of lower quality, as compared to speech signals from a desktop microphone. Thus, with different desktop and telephony bandwidths, speech recognition results will vary when using a mobile computing device microphone instead of a desktop microphone.

### SUMMARY OF THE INVENTION

A method of performing speech recognition, and a mobile computing device implementing the same, are disclosed. The method includes receiving audible speech at a microphone of the mobile computing device. The audible speech is converted into speech signals at the mobile computing device. Also at the mobile computing device, preliminary speech recognition functions are performed on the speech signals to obtain intermediate speech recognition results. Then, secondary speech recognition functions are preformed to obtain requests for results from a second computing device. These requests for results are transmitted from the mobile computing device to a second computing device located remotely from the mobile computing device. The second computing device obtains the results and transmits these results to the mobile device for completion of the speech recognition process.

In some embodiments of the invention, the mobile computing device performs the same preliminary speech recognition functions on the speech signals as would be performed at the second computing device. The intermediate speech recognition results can be speech recognition features extracted from the speech signals. The features can include, for example, Mel-Frequency Cepstrum Coefficients, Vector Quantized (VQ) indices, Hidden Markov Modeling (HMM) scores, HMM state output probability density functions, Cepstral coefficients, or other types of speech recognition features which can be extracted from the speech signals.

Transmitting the requests for results from the mobile computing device to the second computing device, instead of transmitting the speech signals themselves for speech recognition at the second computing device, allows uniform speech recognition models to be used regardless of whether the communication network is wide band or narrow band. Further, in the event that the communication network has a narrower bandwidth than does the mobile computing device microphone, the wider bandwidth speech information is not lost when transmitting the speech recognition features across the narrower bandwidth communication network.

### BRIEF DESCRIPTION OF THE DRAWINGS

FIG. 1 is a simplified block diagram illustrating one embodiment of a mobile device in accordance with the present invention.
FIG. 2 is a more detailed block diagram of one embodiment of the mobile device shown in FIG. 1.
FIG. 3 is a simplified pictorial illustration of one embodiment of the mobile device in accordance with the present invention.
FIG. 4 is a simplified pictorial illustration of another embodiment of the mobile device in accordance with the present invention.
FIG. 5 is a block diagram of an exemplary embodiment of a desktop computer in which portions of the speech recognition process of the invention can be implemented.
FIG. 6 is a flow diagram illustrating methods of the present invention.
FIGS. 7A-7D are block diagrams illustrating a speech recognition system in accordance with embodiments of the invention.

### DETAILED DESCRIPTION OF ILLUSTRATIVE EMBODIMENTS

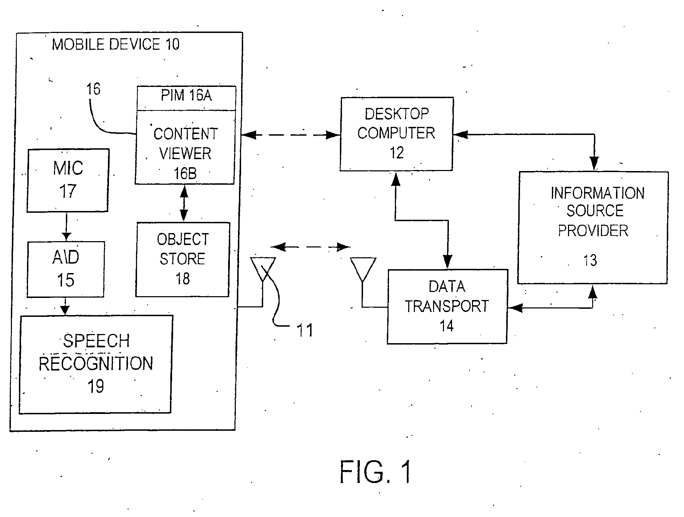

FIG. 1 is a block diagram of an exemplary portable computing device, herein a mobile device 10 in accordance with the present invention. FIG. 1 illustrates that, in one embodiment, the mobile device 10 is suitable for connection with, and to receive information from, a desktop computer 12, a data transport 14, or both. The data transport 14 can be a wireless transport such as a paging network, cellular digital packet data (CDPD), FM-sideband, or other suitable wireless communications. However, it should also be noted that the mobile device 10 may not be equipped to be connected to the desktop computer 12, and the present invention applies regardless of whether the mobile device 10 is provided with this capability. Mobile device 10 can be a personal digital assistant (PDA) or a hand held portable computer having cellular or digital wireless phone capabilities and adapted to perform both conventional PDA functions and to serve as a wireless telephone. In other embodiments, data transport 14 is a cable network, a telephone network, or other non-wireless communication networks.

In an exemplary embodiment, mobile device 10 includes a microphone 17, an analog-to-digital (A/D) converter 15 and speech recognition programs 19. In response to verbal commands, instructions or information from a user of device 10, microphone 17 provides speech signals which are digitized by A/D converter 15. Speech recognition programs 19 perform feature extraction functions on the digitized speech signals to obtain intermediate speech recognition results. Using antenna 11, device 10 transmit the intermediate speech recognition results over transport 14 to desktop computer 12 where additional speech recognition programs are used to complete the speech recognition process. The speech recognition feature extraction aspects of the present invention are discussed below in greater detail.

In some embodiments, mobile device 10 includes one or more other application programs 16 and an object store 18. The application programs 16 can be, for example, a personal information manager (PIM) 16A that stores objects related to a user's electronic mail (e-mail) and scheduling or calendaring information. The application programs 16 can also include a content viewer 16B that is used to view information obtained from a wide-area network, such as the Internet. In one embodiment, the content viewer 16B is an "offline" viewer in that information is stored primarily before viewing, wherein the user does not interact with the source of information in real time. In other embodiments, mobile device 10 operates in a real time environment wherein the transport 14 provides two-way communication. PIM 16A, content viewer 16B and object store 18 are not required in all embodiments of the invention.

In embodiments including PIM 16A, content viewer 16B and object store 18, the wireless transport 14 can also be used to send information to the mobile device 10 for storage in the object store 18 and for use by the application programs 16. The transport 14 receives the information to be sent from an information source provider 13, which, for example, can be a source of news, weather, sports, traffic or local event information. Likewise, the information source provider 13 can receive e-mail and/or scheduling information from the desktop computer 12 to be transmitted to the mobile device 10 through the transport 14. The information from the desktop computer 12 can be supplied to the information source provider 13 through any suitable communication link, such as a direct modem connection. In another embodiment, the desktop computer 12 and the information source provider 13 can be connected together forming a local area network (LAN) or a wide area network (WAN). Such networking environments are commonplace in offices, enterprise-wide computer network Intranets and the Internet. If desired, the desktop computer 12 can also be directly connected to the transport 14.

It is also worth noting that, in one embodiment, the mobile device 10 can be coupled to the desktop computer 12 using any suitable, and commercially available, communication link and using a suitable communications protocol. For instance, in one embodiment, the mobile device 10 communicates with the desktop computer 12 with a physical cable which communicates using a serial communications protocol. Other communication mechanisms include infra-red (IR) communication and direct modem communication.

It is also worth noting that the mobile device 10, in one embodiment, can be synchronized with the desktop computer 12. In that instance, properties of objects stored in object store 18 are similar to properties of other instances of the same objects stored in an object store on the desktop computer 12 or on the mobile device 14. Thus, for example, when one instance of an object stored in the object store on the desktop computer 12, the second instance of that object in the object store 18 of the mobile device 10 is updated the next time the mobile device 10 is connected to the desktop computer 12 so that both instances of the same object contain up-to-date data. This is commonly referred to as synchronization. In order to accomplish synchronization, synchronization components run on both the mobile device 10 and the desktop computer 12. The synchronization components communicate with one another through well defined interfaces to manage communication and synchronization.

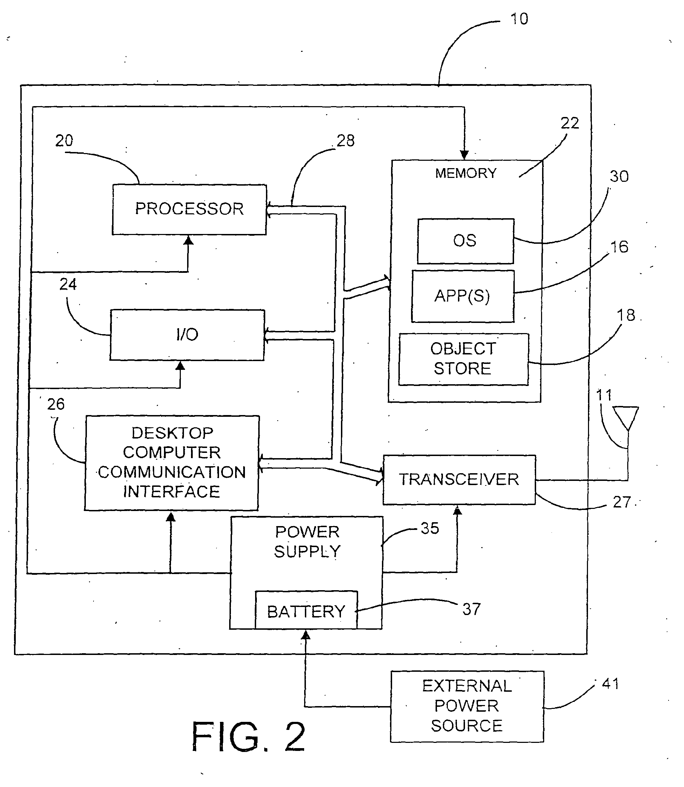

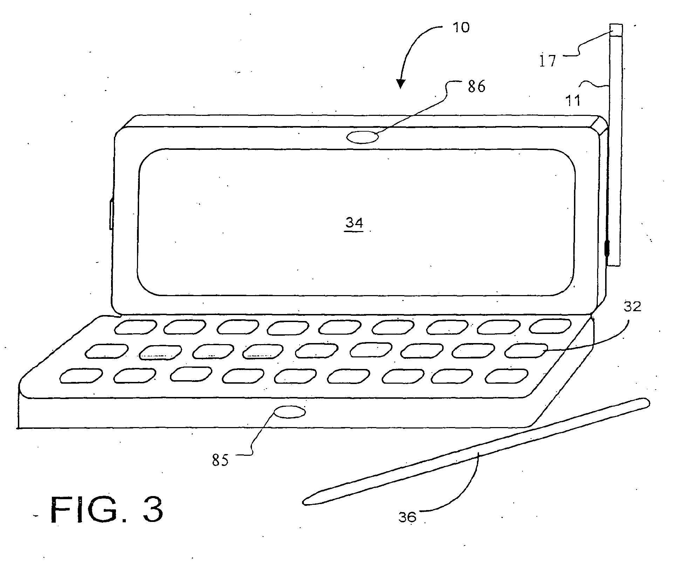

FIG. 2 is a more detailed block diagram of the mobile device 10. As shown, the mobile device 10 includes a processor 20, memory 22, input/output (I/O) components 24, a desktop computer communication interface 26, transceiver 27 and antenna 11. In one embodiment, these components of the mobile device 10 are coupled for communication with one another over a suitable bus 28. Although not shown in FIG. 2, mobile device 10 includes microphone 17 as illustrated in FIG. 1 and discussed below with reference to FIGS. 3-7.

Memory 22 is implemented as non-volatile electronic memory such as random access memory (RAM) with a battery back-up module (not shown) such that information stored in memory 22 is not lost when the general power to the mobile device 10 is shut down. A portion of memory 22 is allocated as addressable memory for program execution, while the remaining portion of memory 22 can be used for storage, such as to simulate storage on a disk drive.

Memory 22 includes an operating system 30, the application programs 16 (such as PIM 16A and speech recognition programs 19 discussed with respect to FIG. 1) and the object store 18. During operation, the operating system 30 is loaded into, and executed by, the processor 20 from memory 22. The operating system 30, in one embodiment, is a Windows CE brand operating system commercially available from Microsoft Corporation. The operating system 30 can be designed for mobile devices, and implements features which can be utilized by PIM 16A, content viewer 16B and speech recognition functions 19 through a set of exposed application programming interfaces and methods. The objects in object store 18 are maintained by PIM 16A, content viewer 16B and the operating system 30, at least partially in response to calls to the exposed application programming interfaces and methods.

The I/O components 24, in one embodiment, are provided to facilitate input and output operations from the user of the mobile device 10. The desktop computer communication interface 26 is optionally provided as any suitable, and commercially available, communication interface. The interface 26 is used to communicate with the desktop computer 12 when wireless transceiver 27 is not used for that purpose.

The transceiver 27 is a wireless or other type of transceiver adapted to transmit speech signals or intermediate speech recognition results over transport 14. In embodiments in which transceiver 27 is a wireless transceiver, the intermediate speech recognition results can be transmitted using antenna 11. Transceiver 27 can also transmit other data over transport 14. In some embodiments, transceiver 27 receives information from desktop computer 12, the information source provider 13, or from other mobile or non-mobile devices or phones. The transceiver 27 is coupled to the bus 28 for communication with the processor 20 and the object store 18 to store information received from transport 14.

A power supply 35 includes a battery 37 for powering the mobile device 10. Optionally, the mobile device 10 can receive power from an external power source 41 that overrides or recharges the built-in battery 37. For instance, the external power source 41 can include a suitable AC or DC adapter, or a power docking cradle for the mobile device 10.

FIG. 3 is a simplified pictorial illustration of one embodiment of the mobile device 10 which can be used in accordance with the present invention. In this embodiment, in addition to antenna 11 and microphone 17, mobile device 10 includes a miniaturized keyboard 32, a display 34, a stylus 36, a second microphone 85 and a speaker 86. In the embodiment shown in FIG. 3, the display 34 is a liquid crystal display (LCD) which uses a contact sensitive display screen in conjunction with the stylus 36. The stylus 36 is used to press or contact the display 34 at designated coordinates to accomplish certain user input functions. The miniaturized keyboard 32 is implemented as a miniaturized alpha-numeric keyboard, with any suitable and desired function keys which are also provided for accomplishing certain user input functions.

Microphone 17 is positioned on a distal end of antenna 11. Antenna 11 is in turn adapted to rotate toward the mouth of the user, thereby reducing the distance between the mouth of the user and microphone 17 while mobile device 10 is held in the palm of the user's hand. As noted above, reducing this distance helps to increase the signal-to-noise ratio of the speech signals provided by the microphone. Further, placement of microphone 17 at the tip of antenna 11 moves the microphone from the housing of mobile device 10. This reduces the effects of internal device noise on the signal-to-noise ratio. While in some embodiments of the invention microphone 17 is located at the distal end of antenna 11, in other embodiments, microphone 17 can be placed at other positions on antenna 11.

In some embodiments, mobile device 10 also includes second microphone 85, which can be positioned on the housing of mobile device 10. Providing a second microphone 85 which is distanced from first microphone 17 enhances performance of the resulting microphone array when the two microphones are used together. In some embodiments, speaker 86 is included to allow mobile device 10 to be used as a mobile telephone.

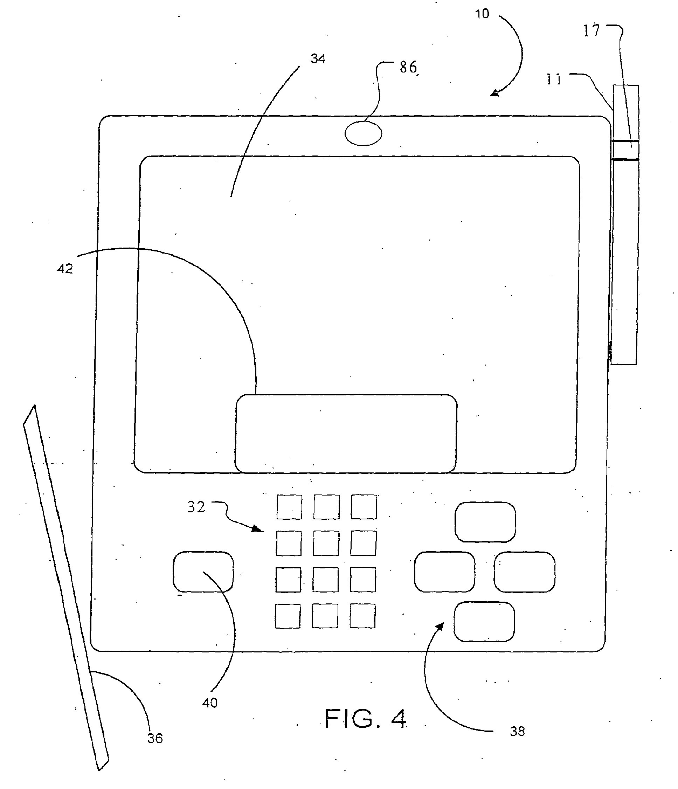

FIG. 4 is another simplified pictorial illustration of the mobile device 10 in accordance with another embodiment of the present invention. The mobile device 10, as illustrated in FIG. 4, includes some items which are similar to those described with respect to FIG. 3, and are similarly numbered. For instance, the mobile device 10, as shown in FIG. 4, also includes microphone 17 positioned on antenna 11 and speaker 86 positioned on the housing of the device. Also, mobile device 10 includes touch sensitive display 34 which can be used, in conjunction with the stylus 36, to accomplish certain user input functions. It should be noted that the display 34 for the mobile devices shown in FIGS. 3 and 4 can be the same size, or of different sizes, but will typically be much smaller than a conventional display used with a desktop computer. For example, the displays 34 shown in FIGS. 3 and 4 may be defined by a matrix of only 240x320 coordinates, or 160x160 coordinates, or any other suitable size.

The mobile device 10 shown in FIG. 4 also includes a number of user input keys or buttons (such as scroll buttons 38 and/or keyboard 32) which allow the user to enter data or to scroll through menu options or other display options which are displayed on display 34, without contacting the display 34. In addition, the mobile device 10 shown in FIG. 4 also includes a power button 40 which can be used to turn on and off the general power to the mobile device 10.

It should also be noted that in the embodiment illustrated in FIG. 4, the mobile device 10 includes a hand writing area 42. Hand writing area 42 can be used in conjunction with the stylus 36 such that the user can write messages which are stored in memory 22 for later use by the mobile device 10. In one embodiment, the hand written messages are simply stored in hand written form and can be recalled by the user and displayed on the display 34 such that the user can review the hand written messages entered into the mobile device 10. In another embodiment, the mobile device 10 is provided with a character recognition module such that the user can enter alpha-numeric information into the mobile device 10 by writing that alpha-numeric information on the area 42 with the stylus 36. In that instance, the character recognition module in the mobile device 10 recognizes the alpha-numeric characters and converts the characters into computer recognizable alpha-numeric characters which can be used by the application programs 16 in the mobile device 10.

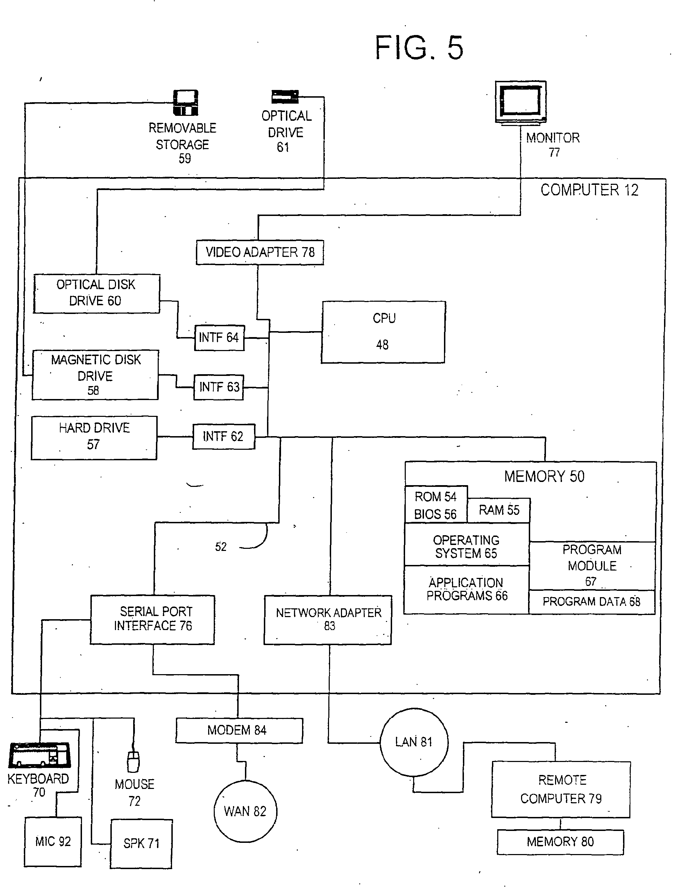

FIG. 5 and the related discussion are intended to provide a brief, general description of a suitable desktop computer 12 in which portions of the invention may be implemented. Although not required, the invention will be described, at least in part, in the general context of computer-executable instructions, such as program modules, being executed by a personal computer 12 or mobile device 10. Generally, program modules include routine programs, objects, components, data structures, etc. that perform particular tasks or implement particular abstract data types. While referred to as a desktop computer, the computing environment illustrated in FIG. 5 can be implemented in other non-desktop computers. Moreover, those skilled in the art will appreciate that desktop computer 12 may be implemented with other computer system configurations, including multiprocessor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to FIG. 5, an exemplary system for implementing desktop computer 12 includes a general purpose computing device in the form of a conventional personal computer, including processing unit 48, a system memory 50, and a system bus 52 that couples various system components including the system memory 50 to the processing unit 48. The system bus 52 may be any of several types of bus structures including a memory bus or memory controller, a peripheral bus, and a local bus using any of a variety of bus architectures. The system memory 50 includes read only memory (ROM) 54 and random access memory (RAM) 55. A basic input/output system (BIOS) 56, containing the basic routine that helps to transfer information between elements within the desktop computer 12, such as during start-up, is stored in ROM 54. The desktop computer 12 further includes a hard disk drive 57 for reading from and writing to a hard disk (not shown), a magnetic disk drive 58 for reading from or writing to removable magnetic disk 59, and an optical disk drive 60 for reading from or writing to a removable optical disk 61 such as a CD ROM or other optical media. The hard disk drive 57, magnetic disk drive 58, and optical disk drive 60 are connected to the system bus 52 by a hard disk drive interface 62, magnetic disk drive interface 63, and an optical drive interface 64, respectively. The drives and the associated computer-readable media provide nonvolatile storage of computer readable instructions, data structures, program modules and other data for the desktop computer 12.

Although the exemplary environment described herein employs a hard disk, a removable magnetic disk 59 and a removable optical disk 61, it should be appreciated by those skilled in the art that other types of computer readable media which can store data that is accessible by a computer, such as magnetic cassettes, flash memory cards, digital video disks (DVDs), Bernoulli cartridges, random access memories (RAMs), read only memory (ROM), and the like, may also be used in the exemplary operating environment.

A number of program modules may be stored on the hard disk, magnetic disk 59, optical disk 61, ROM 54 or RAM 55, including an operating system 65, one or more application programs 66 (which may include PIMs), other program modules 67 (which may include synchronization component 26), and program data 68. A user may enter commands and information into the desktop computer 12 through input devices such as a keyboard 70, pointing device 72, and microphone 92. Other input devices (not shown) may include a joystick, game pad, satellite dish, scanner, or the like. These and other input devices are often connected to the processing unit 48 through a serial port interface 76 that is coupled to the system bus 52, but may be connected by other interfaces, such as a sound card, a parallel port, game port or a universal serial bus (USB). A monitor 77 or other type of display device is also connected to the system bus 52 via an interface, such as a video adapter 78. In addition to the monitor 77, desktop computers may typically include other peripheral output devices such as speaker 71 and printers.

The desktop computer 12 may operate in a networked environment using logic connections to one or more remote computers (other than mobile device 10), such as a remote computer 79. The remote computer 79 may be another personal computer, a server, a router, a network PC, a peer device or other network node, and typically includes many or all of the elements described above relative to desktop computer 12, although only a memory storage device 80 has been illustrated in FIG. 5. The logic connections depicted in FIG. 5 include a local area network (LAN) 81 and a wide area network (WAN) 82. Such networking environments are commonplace in offices, enterprise-wide computer network intranets and the Internet.

When used in a LAN networking environment, the desktop computer 12 is connected to the local area network 81 through a network interface or adapter 83. When used in a WAN networking environment, the desktop computer 12 typically includes a modem 84 or other means for establishing communications over the wide area network 82, such as the Internet. The modem 84, which may be internal or external, is connected to the system bus 52 via the serial port interface 76. In a network environment, program modules depicted relative to desktop computer 12, or portions thereof, may be stored in the remote memory storage devices. It will be appreciated that the network connections shown are exemplary and other means of establishing a communications link between the computers may be used.

Desktop computer 12 runs operating system 65 that is typically stored in non-volatile memory 54 and executes on the processor 48. One suitable operating system is a Windows brand operating system sold by Microsoft Corporation, such as Windows 95 or Windows NT, operating systems, other derivative versions of Windows brand operating systems, or another suitable operating system. Other suitable operating systems include systems such as the Macintosh OS sold from Apple Corporation, and the OS/2 Presentation Manager sold by International Business Machines (IBM) of Armonk, New York. Application programs can be stored in program module 67, in volatile memory or non-volatile memory, or can be loaded into any of the components shown in FIG. 5 from a floppy diskette 59, CDROM drive 61, downloaded from a network via network adapter 83, or loaded using another suitable mechanism.

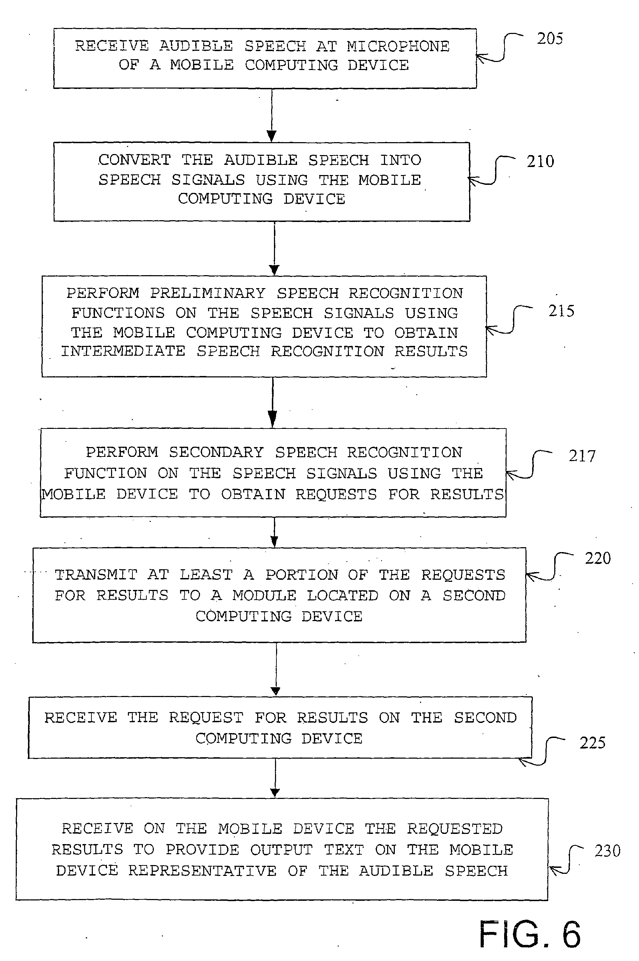

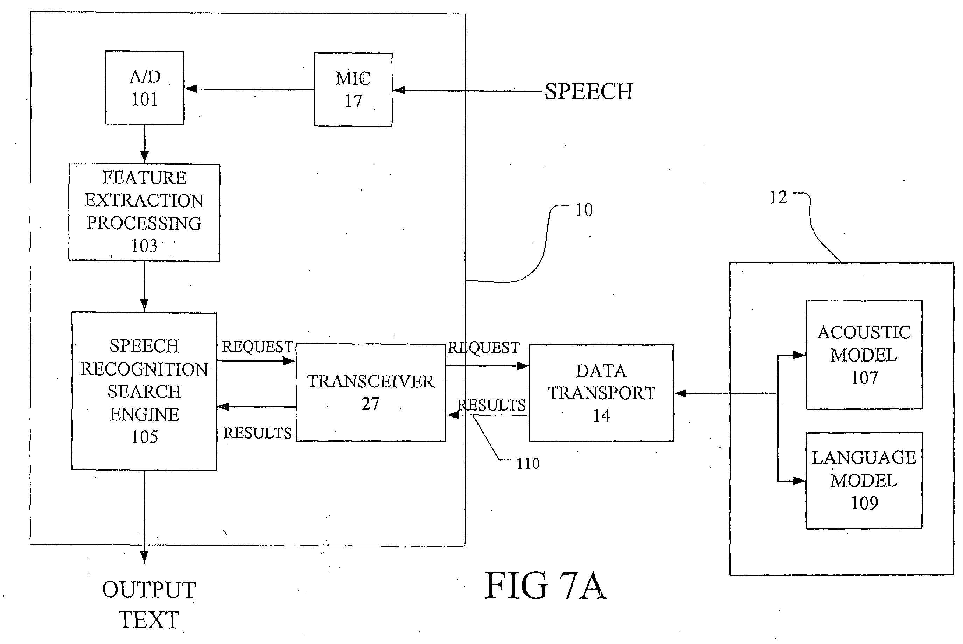

A flow diagram illustrating methods of the invention is shown in FIG. 6. The methods shown in FIG. 6 are described with reference to the exemplary embodiment of a mobile computing device and a desktop computer provided in FIGS. 7A-7D. FIGS. 7A-7D illustrate the separation of the speech recognition feature extraction process performed in the mobile device 10 from the other speech recognition functions performed in computer 12. In the embodiments illustrated, during speech recognition, speech is provided as an input into the microphone of mobile device 10 in the form of an audible voice signal by the user. This step is illustrated at block 205 of FIG. 6. The microphone 17 converts the audible voice signal into an analog signal which is provided to the A/D converter 101. The A/D converter 101 converts the analog speech signal into a sequence of digital signals, which is provided to the feature extraction module 103. This step is illustrated at block 210 of FIG. 6.

Feature extraction module 103, which can be considered a "front-end" of the continuous speech recognition process, provides as an output intermediate speech recognition results which are provided to speech recognition search engine 105. Results provided by feature extraction module 103 are correlated to the type of feature which feature recognition search engine 105 is adapted to utilize. For example, the intermediate speech recognition results provided by feature extraction module 103 can be Mel-Frequency Cepstrum Coefficients (MFCC Coefficients) or Vector Quantized (VQ) indices. The intermediate results can also be Hidden Markov Modeling (HMM) scores, HMM state output probability density functions (pdf), Cepstral coefficients, or other types of speech recognition features which can be extracted from the speech signals.

In one embodiment, the feature extraction module 103 is a conventional array processor that performs spectral analysis on the digital signals and computes a magnitude value for each frequency band of a frequency spectrum. In other embodiments, the feature extraction module 103 can also encode feature vectors into one or more code words using vector quantization techniques and a codebook derived from training data. Thus, the feature extraction module 103 provides, at its output the feature vectors (or code words) for each spoken utterance. In some embodiments, the intermediate results are computed by feature extraction module 103 by determining output probability distributions computed against Hidden Markov Models using the feature vector (or code words) of a particular frame being analyzed. These probability distributions can then be used in executing a Viterbi or similar type of processing technique in desktop computer 12. The feature extraction functions implemented by feature extraction module 103 are illustrated generally at block 215 of the flow diagram shown in FIG. 6.

Since the bandwidth provided by microphone 17 will typically be wider than the bandwidth provided by data transport 14, the internal representations or intermediate results provided by feature extraction module 103 will be more accurate than if the speech signals had been transmitted across transport 14 for feature extraction within computer 12. The speech recognition results provided by speech recognition search engine 105 should be the same as the results obtained if microphone 17 were connected directly to desktop computer 12. Thus, the problem of having different standards between desktop and telephony bandwidths is eliminated.

Illustrated at block 217 of FIG. 6 is the step of performing secondary speech recognition functions on the intermediate speech recognition results, using the mobile device 10, to obtain requests for results

Transmission of the requests for results from mobile device 10 to the second computing device 12 is illustrated at block 220 of FIG. 6. Receipt of the request for results by the second computing device 12 is illustrated at block 225. Receipt of the results from the second computing device 12 by the mobile device 10 is illustrated at block 230 to provide output text on the mobile device 10 representative of the audible speech. Details of these specific steps are outlined below with regards to FIGS. 7A-7D. Depending on the arrangement of mobile device 10 all of the requests for results may be transmitted or a portion of these requests can be transmitted.

Referring to FIGS. 7A-7D, speech recognition search engine 105 is implemented as an application program within mobile device 10, and it implements the "secondary" speech recognition functions to obtain the requests for speech recognition results as a function of the intermediate speech recognition results. In the embodiment of FIG. 7A, acoustic model 107 and language model 109 are stored within the memory of desktop computer 12. Upon receiving the intermediate speech recognition results from feature extraction module 103, the speech recognition search engine 105 generates the requests for results in order to access information stored in the acoustic model 107 on desktop computer 12 by using a transceiver 27 and data transport 14 to provide the requests to the computer 12.

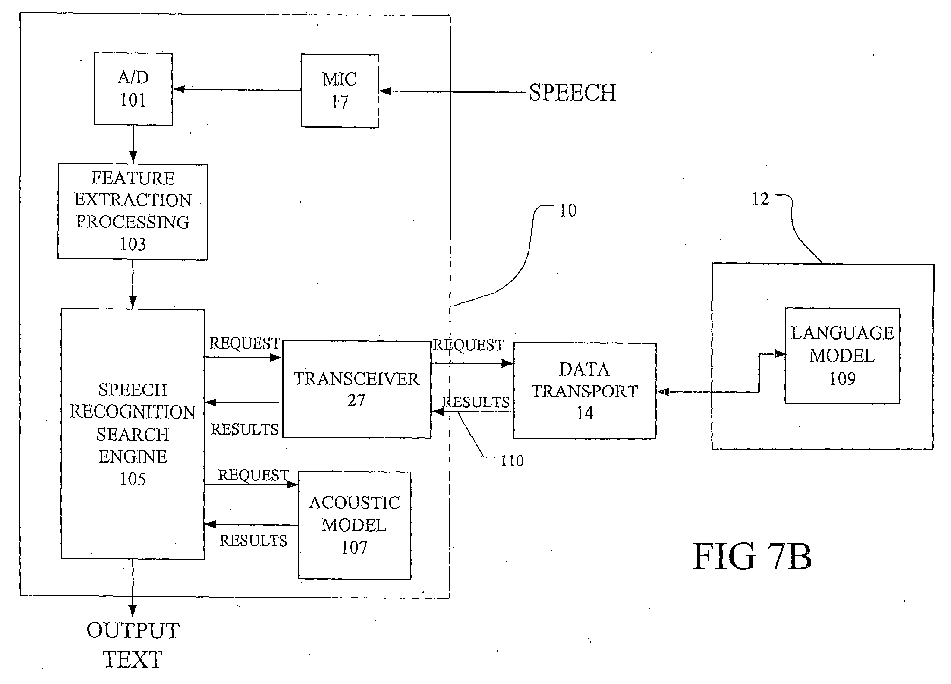

The acoustic model 107 stores acoustic models, such as Hidden Markov Models, which represent speech units to be detected by computer 12. This information (the requested results) is transmitted to speech recognition search engine 105 via a back channel communications link 110 in data transport 14. In one embodiment, the acoustic model 107 includes a senone tree associated with each Markov state in a Hidden Markov Model. The Hidden Markov models represent, in one illustrative embodiment, phonemes. Based upon the senones in the acoustic model 107, the search engine 105 determines the most likely phonemes represented by the feature vectors (or code words) received from the feature extraction module 103, and hence representative of the utterance received from the user of the system. The acoustic model then return as a result, in the above example, phonemes based upon the Hidden Markov Model and a senone tree. However, results can be based upon other Models. While acoustic module 107 is in some embodiments located remotely (from mobile device 10) in computer 12, in alternative embodiments acoustic module 107 can be located on the mobile device, as illustrated in FIG. 7B. In these embodiments, other request for results are generated as a function of the intermediate speech recognition results, and are transmitted to the remote computer 12. In the instance illustrated in FIG. 7B, the remote computer 12 can be a web server that hosts language module 109. In this example, the speech recognition performed by the mobile device relies on the web server to supply the needed language model or context information.

Speech recognition search engine 105 also accesses information stored in language model 109 on desktop computer 12 by using transceiver 27 and data transport 14. The information received by search engine 105 through data transport 14, based upon its accessing of acoustic model 107 and receipt of the requested results, can be used in searching language model 109 to determine a word that most likely represents the intermediate speech recognition results received from module 103. This word is transmitted back to the mobile device 10 and speech recognition search engine 105 via the back channel communications link 110 in data transport 14. Using acoustic model 107 and language model 109, as well as other speech recognition models or databases of the type known in the art, speech recognition search engine 105 provides output text corresponding to the original vocal signals received by microphone 17 of mobile device 10. The particular methods implemented by speech recognition engine 105 to generate the output text as a function of the internal representations of the speech recognition intermediate results can vary from the exemplary embodiments described above.

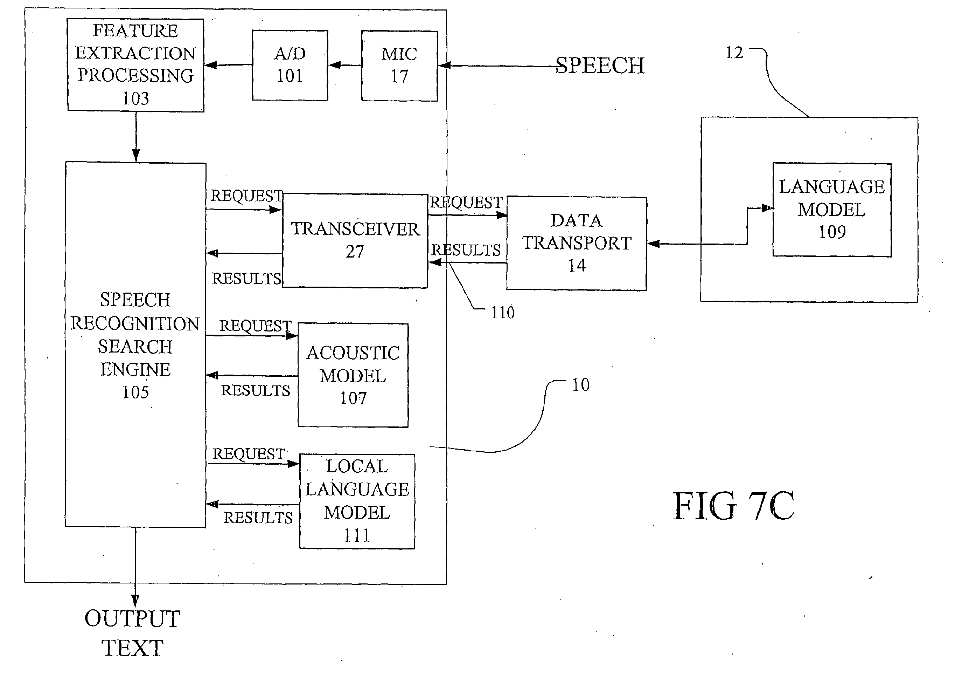

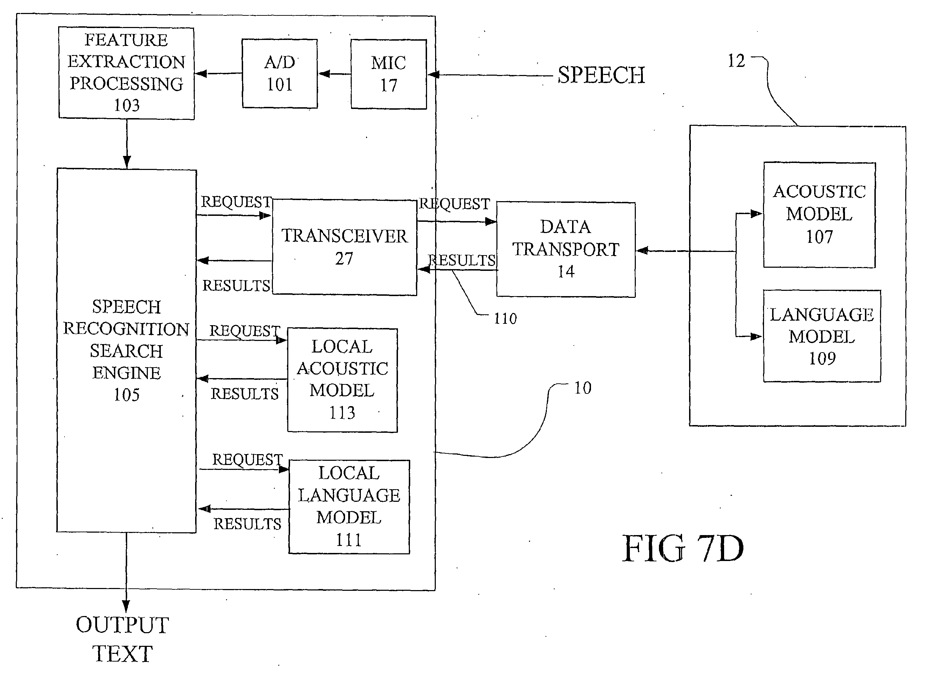

In other embodiments, as illustrated in FIGS. 7C and 7D, mobile device 10 also includes a local language model 111. When local language model 111 is included on mobile device, speech recognition search engine 105 provides requests for results to both the language module 109 on the remote computer 12 and to the local language model 111. Local language model 111 is similar to the language model 109 described above, in that it can be searched to determine a word that most likely represents the intermediate speech recognition results received from feature extraction module 103. The speech recognition search engine 105 is configured to determine which result received from the two language models is the best match to the request. The best result is chosen to be outputted to the user as the recognized output text. In some embodiments the remote language model 109 updates the local language model 111, through an update procedure. This update can be through a web based update procedure, through an update disc, or through any other device that permits the updating of files. In another embodiment language model 109 supplements the local language model 111 by providing additional language model capacity, thus allowing a smaller local language module to be included in mobile device 10.

In the embodiment illustrated in FIG 7D, mobile device 10 also includes a local acoustic model 113. In this embodiment, the remote computer 12 also includes an acoustic model 107. Local acoustic model 113 is similar to the acoustic model 107 described above in that it stores acoustic models which represent speech units to be detected by mobile device 10. When local acoustic model 113 is included on mobile device 10, speech recognition search engine 105 provides requests for results to both acoustic model 107 on the remote computer 12 and to the local acoustic model 113. The acoustic models return as results, in one embodiment, phonemes based upon a Hidden Markov Model and a senone tree. However, results can be based upon other Models. The speech recognition search engine 105 is configured to determine which result received from the two acoustic models is the best match to the request. The best match to the request is then used by the language models 109 and 111 to determine the word that was spoken by the user.

As discussed above, the present invention can utilize digital wireless networks using package protocols to transmit the intermediate speech recognition results from feature extraction module 103 and the requests for results from the speech recognition search engine 105. Transformation of the wide bandwidth speech signals from microphone 17 into intermediate speech recognition results using mobile device 10 prevents the loss of data which can occur when transmitting the signals across transport 14. This provides unified desktop-quality audio speech recognition for mobile computing devices. In some embodiments, the mobile devices of the present invention are "smart" phones which are programmed to operate in two modes. When the user of mobile device 10 is talking to another person, audio signals are transmitted across transport 14. When the user of mobile device 10 is speaking to computer 12 or to other machines, the intermediate results or features provided by feature extraction module 103 and the requests for results from speech recognition search engine 105 are transmitted. Subsequently, desktop computer 12, or the other corresponding machines, will utilize the transmitted features to perform speech recognition.

In summary, the requests for results can include requests for acoustic module data and/or requests for language module data. The requests for results are generated by the speech recognition search engine 105 which is located on mobile device 10. Regardless of the location of the acoustic and language modules, at least a portion of these requests for results must be transmitted to the second computing device 12. In one embodiment, both the language module and the acoustic module reside on the second computing device 12, and the requests for results include both requests for language module data and acoustic module data. In another embodiment the acoustic module resides on the mobile computing device 10 and the language module resides on the remote computing device 12. In this embodiment a portion of the requests for results from the speech recognition search engine 105 are transmitted to the local acoustic module. Once the results are transmitted back to the speech recognition search engine, requests for language module data results are transmitted from the speech recognition search engine 105 to the language module located on the second computing device 12. In yet another embodiment the speech recognition search engine transmits requests for acoustic module results to both an acoustic module on the mobile computing device 10 and an acoustic module located on the second computing device 12. Upon receipt of these results from both acoustic modules, the speech recognition search engine 105 transmits requests for language module results to the language module located on the remote computing device 12. In another embodiment, the speech recognition search engine 105 transmits both requests for acoustic module data results and requests for language module data results to a local acoustic or language module and a remote acoustic or language module located on the second computing device 12.

Although the present invention has been described with reference to various embodiments, workers skilled in the art will recognize that changes may be made in form and detail without departing from the spirit and scope of the invention.

## Claims

1. A method of performing speech recognition, the method comprising:
receiving audible speech at a microphone of a mobile computing device;
converting the audible speech into speech signals using the mobile computing device;
performing preliminary speech recognition functions on the speech signals using the mobile computing device to obtain intermediate speech recognition results wherein performing the preliminary speech recognition functions on the speech signals to obtain the intermediate speech recognition results further comprises performing feature extraction functions on the speech signals to obtain the intermediate speech recognition results indicative of features of the speech signals;
performing secondary speech recognition functions on the speech signals using the mobile computing device to obtain requests for speech recognition results indicative of recognized audible speech;
transmitting at least a portion of the requests for speech recognition results to a second computing device located remotely from the mobile device in order to access at least one module located on the second computing device to obtain the requested speech recognition results; and
receiving the requested speech recognition results, from the second computing device, at the mobile computing device to provide output text representative of the audible speech.

2. The method of claim 1, and further comprising:
receiving the at least a portion of the requests for results at the second computing device;
accessing the at least one module on the second computing device to get the requested results; and
transmitting the requested results to the mobile device.

3. The method of claim 2 further comprising:
transmitting a portion of the requests for results to an acoustic model located on the mobile computing device.

4. The method of claim 3 wherein transmitting the at least a portion of the requests for results to the second computing device further comprises transmitting the at least a portion of the requests for results to a language model located on the remote computer the method further comprising:
transmitting a portion of the requests for results to a language model located on the mobile computing device.

5. The method of claim 4 further comprising:
updating the language model on the mobile computing device with information contained in the language model on the second computing device.

6. The method of claim 2, wherein accessing the at least one module on the second computing device further comprises accessing acoustic model information stored in a memory of the second computing device to provide the output text on the mobile computing device representative of the audible speech as a function of the intermediate speech recognition results and of the acoustic model information.

7. The method of claim 2, wherein accessing the at least one module on the second computing device further comprises accessing language model information stored in a memory of the second computing device to provide the output text on the mobile computing device representative of the audible speech as a function of the intermediate speech recognition results and of the language model information.

8. The method of claim 1, wherein converting the audible speech into speech signals at the mobile computing device further comprises:
converting the audible speech signals into analog signals; and
digitizing the analog signals to obtain the speech signals.

9. The method of claim 1, wherein performing preliminary speech recognition functions on the speech signals further comprises determining Mel-Frequency Cepstrum Coefficients from the speech signals, wherein performing secondary speech recognition functions further comprises determining the requests for results based upon the Mel-Frequency Cepstrum Coefficients, and wherein transmitting at least a portion of the requests for results further comprises transmitting the at least a portion of the requests for results based on the Mel-Frequency Cepstrum Coefficients from the mobile computing device to the second computing device.

10. The method of claim 1, wherein performing preliminary speech recognition functions on the speech signals further comprises determining vector quantized indices from the speech signals, wherein performing secondary speech recognition functions further comprises determining the requests for results based upon the vector quantized indices, and wherein transmitting requests further comprises transmitting requests based upon the vector quantized indices from the mobile computing device to the second computing device.

11. The method of claim 1, wherein performing preliminary speech recognition functions on the speech signals further comprises determining Hidden Markov Modeling (HMM) scores from the speech signals, wherein performing secondary speech recognition functions further comprises determining the requests for results based upon the HMM scores, and wherein transmitting requests further comprises transmitting requests based upon the HMM scores from the mobile computing device to the second computing device.

12. The method of claim 1, wherein performing preliminary speech recognition functions on the speech signals further comprises determining Hidden Markov Modeling (HMM) state output probability density functions from the speech signals, wherein performing secondary speech recognition functions further comprises determining the requests for results based upon the HMM state output probability, and wherein transmitting requests further comprises transmitting requests based upon the HMM state output probability density functions from the mobile computing device to the second computing device.

13. The method of claim 1, wherein performing preliminary speech recognition functions on the speech signals further comprises determining Cepstral coefficients from the speech signals, wherein performing secondary speech recognition functions further comprises determining the requests for results based upon the Cepstral coefficients, and wherein transmitting requests further comprises transmitting requests based upon the Cepstral coefficients from the mobile computing device to the second computing device.

14. The method of claim 1, wherein performing preliminary speech recognition functions on the speech signals further comprises determining feature vectors from the speech signals, wherein performing secondary speech recognition functions further comprises determining the requests for results based upon the feature vectors, and wherein transmitting the intermediate speech recognition results from the mobile device to the second computing device further comprises transmitting the feature vectors from the mobile computing device to the second computing device.

15. The method of claim 1, wherein transmitting the at least a portion of the requests for results further comprises transmitting the at least a portion of the requests for results from the mobile computing device to the second computing device over a wireless communications network.

16. The method of claim 1, wherein transmitting the at least a portion of the requests for results further comprises transmitting the at least a portion of the requests for results from the mobile computing device to the second computing device over a communications network having a bandwidth which is less than a bandwidth of the microphone of the mobile computing device.

17. The method of claim 1, and further comprising providing the output text, at the mobile computing device, as a function of the received requested results.

18. A computer-readable medium having mobile computer-executable instructions for performing the steps of:
implementing preliminary and secondary speech recognition functions on speech signals, corresponding to audible speech from a user of a mobile computer having a microphone, to obtain requests for results;
sending at least a portion of the requests for results to a transmitter of the mobile computer to transmit the at least a portion of the requests for results from the mobile computer to a second computer located remotely from the mobile computer; and
receiving the results from the second computer to finish the speech recognition functions on the mobile device.

19. The computer readable medium of claim 18, wherein the computer-executable instructions for performing the step of implementing the preliminary and secondary speech recognition functions on the speech signals further includes computer-executable instructions for performing feature extraction functions on the speech signals to obtain intermediate speech recognition results indicative of features of the speech signals, and wherein the computer executable instructions further comprise using the intermediate speech recognition results to obtain the requests for results based upon the feature extraction functions.

20. The computer readable medium of claim 19, wherein the computer-executable instructions for performing the feature extraction functions on the speech signals further includes computer-executable instructions for determining Mel-Frequency Cepstrum Coefficients from the speech signals, and wherein the computer-executable instructions for sending the at least a portion of the requests for results to the transmitter of the mobile computer further includes computer-executable instructions for sending the at least a portion of the requests for results based on the Mel-Frequency Cepstrum Coefficients.

21. The computer readable medium of claim 19, wherein the computer-executable instructions for performing the feature extraction functions on the speech signals further includes computer-executable instructions for determining vector quantized indices from the speech signals, and wherein the computer-executable instructions for sending the at least a portion of the requests for results to the transmitter of the mobile computer further includes computer-executable instructions for sending the at least a portion of the requests for results based on the vector quantized indices.

22. The computer readable medium of claim 19, wherein the computer-executable instructions for performing the feature extraction functions on the speech signals further includes computer-executable instructions for determining Hidden Markov Modeling (HMM) scores from the speech signals, and wherein the computer-executable instructions for sending the at least a portion of the requests for results to the transmitter of the mobile computer further includes computer-executable instructions for sending the at least a portion of the requests for results based on the HMM scores.

23. The computer readable medium of claim 19, wherein the computer-executable instructions for performing the feature extraction functions on the speech signals further includes computer-executable instructions for determining Hidden Markov Modeling (HMM) state output probability density functions from the speech signals, and wherein the computer-executable instructions for sending the at least a portion of the requests for results to the transmitter of the mobile computer further includes computer-executable instructions for sending the at least a portion of the requests for results based on the HMM state output probability density functions.

24. The computer readable medium of claim 19, wherein the omputer-executable instructions for performing the feature extraction functions on the speech signals further includes computer-executable instructions for determining Cepstral coefficients from the speech signals, and wherein the computer-executable instructions for sending the at least a portion of the requests for results to the transmitter of the mobile computer further includes computer-executable instructions for sending the at least a portion of the requests for results based on the Cepstral coefficients.

25. The computer readable medium of claim 19, wherein the computer-executable instructions for performing the feature extraction functions on the speech signals further includes computer-executable instructions for determining feature vectors from the speech signals, and wherein the computer-executable instructions for sending the at least a portion of the requests for results to the transmitter of the mobile computer further includes computer-executable instructions for sending the at least a portion of the requests for results based on feature vectors.

26. A mobile computer comprising:
a microphone adapted to convert audible speech into analog signals;
an analog-to-digital converter coupled to the microphone and adapted to digitize the audible speech to provide speech signals;
a feature extraction module adapted to perform preliminary speech recognition functions on the speech signals to provide intermediate speech recognition results, wherein the intermediate speech recognition results are indicative of features of the speech signals;
a speech recognition module configured to perform secondary speech recognition functions to obtain requests for speech recognition results indicative of recognized audible speech; and
a transceiver coupled to the speech recognition module and adapted to transmit at least a portion of the requests for speech recognition results from the mobile computer to a second computer located remotely from the mobile computer, and to receive the requested speech recognition results from the second computer.

27. The mobile computer of claim 26, wherein the feature extraction module is adapted to determine from the speech signals Mel-Frequency Cepstrum Coefficients and to provide the Mel-Frequency Cepstrum Coefficients as the intermediate speech recognition results.

28. The mobile computer of claim 26, wherein the feature extraction module is adapted to determine from the speech signals vector quantized indices and to provide the vector quantized indices as the intermediate speech recognition results.

29. The mobile computer of claim 26, wherein the feature extraction module is adapted to determine from the speech signals Hidden Markov Modeling (HMM) scores and to provide the HMM scores as the intermediate speech recognition results.

30. The mobile computer of claim 26, wherein the feature extraction module is adapted to determine from the speech signals Hidden Markov Modeling (HMM) state output probability density functions and to provide the HMM state output probability density functions as the intermediate speech recognition results.

31. The mobile computer of claim 26, wherein the feature extraction module is adapted to determine from the speech signals Cepstral coefficients and to provide the Cepstral coefficients as the intermediate speech recognition results.

32. The mobile computer of claim 26, wherein the feature extraction module is adapted to determine from the speech signals feature vectors and to provide the feature vectors as the intermediate speech recognition results.

33. The mobile computer of claim 26 further comprising:
an acoustic model configured to provide acoustic model results to the speech recognition module in response to the requests for results.

34. The mobile computer of claim 26 further comprising:
a language model configured to provide results to the speech recognition module in response to the request for results.

35. The mobile computer of claim 32 or 33 further comprising:
a language model configured to provide results to the speech recognition module in response to the request for results;
wherein the language model is configured to be updated from a remote language model.

36. The mobile computer of claim 33 further comprising:
a language model configured to provide results to the speech recognition module in response to the request for results;
wherein the language model is configured to be updated from a remote language model.
